# EUROPEAN PATENT SPECIFICATION

(11) **EP 4 393 116 B1**
(45) Date of publication and mention of the grant of the patent: **04.11.2026**
(21) Application number: 22755330.2
(22) Date of filing: 30.06.2022
(51) Int. Cl.: H04L 12/18, H04L 51/10, H04L 51/18

(54) **STREAMING DATA PROCESSING FOR HYBRID ONLINE MEETINGS**
STREAMING-DATENVERARBEITUNG FÜR HYBRIDE ONLINE-MEETINGS
TRAITEMENT DE DONNÉES DE DIFFUSION EN CONTINU POUR DES RÉUNIONS EN LIGNE HYBRIDES

(30) Priority: 25.08.2021 US 202117411905
(43) Date of publication of application: 03.07.2024
(73) Proprietor: Microsoft Technology Licensing, LLC, Redmond, WA 98052-6399 (US)
(72) Inventor: IFRACH, Shai, Redmond, Washington 98052-6399 (US); SOMECH, Haim, Redmond, Washington 98052-6399 (US)
(74) Representative: CMS Cameron McKenna Nabarro Olswang LLP
(86) International application number: PCT/US2022/035631
(87) International publication number: WO 2023/027808

(56) References cited:
- US-A1- 2009 147 070
- US-A1- 2009 210 491
- US-A1- 2013 169 742
- US-A1- 2021 111 916
- US-B1- 9 774 823

## Description

### BACKGROUND

Online meeting generally refers to a computing platform that enables multiple users to interact with one another via video/audio streaming delivered real-time by a computer network such as the Internet. During a meeting session, computing devices can initially establish streaming connections with a remote server configured to relay video/audio streams for the session. Upon establishing the streaming connections, each computing device can capture and transmit to the remote server a video/audio stream of a participant. The remote server then can then relay the received video/audio streams to the other participants. As such, the participants of the online meeting can interact with and view videos of one another in real-time.

US 2009147070 A1 describes how during a video conference between a local endpoint and a remote endpoint, a display at the local endpoint may be configured to provide perspective-dependent views to local video conference participants. A local endpoint may receive a plurality of video streams and identify a first video stream that provides a first view of a remote participant and a second video stream that provides a second view of that participant taken concurrently from a different angle. A display at the local endpoint may display the first video stream at a first viewing angle that only allows the first view of the remote participant to be seen from a first region. The display may also concurrently display the second video stream at a second viewing angle that only allows the second view of the remote participant to be seen from a second region different than the first region.

US 2021111916 A1 describes devices, systems, methods, and machine-readable mediums for a network-based communication service that allows users in a network-based communication session to subscribe to video streams of the communication session that are of interest by subscribing to content features of those video streams rather than the video streams themselves. Content features may be any object in the video stream that is recognized by applying an image processing algorithm to one or more video frames. Example content features may include recognized users and/or other recognized objects.

US 9774823 B1 describes a video communication system that includes a computer readable medium and a processor, coupled with a wide angle and high resolution digital camera and the computer readable medium. The processor causes the wide angle and high resolution digital camera to acquire a digital image of a local participant during a video communication session. The processor extracts a first image of a first set of objects and a second image of a second set of objects from the digital image and provides the extracted first and second images to a remote endpoint for display to another participant.

US 2013169742 A1 describes techniques for providing dynamic active participants in a real-time visual communication session between two or more participants. When there are more participants in the real-time visual communication session than computing devices connected to the communication session can support visual data from, a subset of the participants are chosen to be active participants. Visual data of the active participants are displayed by one or more of the computing devices. The active participants are chosen based on participation properties. Active participants may become passive and passive participants may become active based on the participation properties. The quality of visual data associated with active participants (e.g., compression rate, output display size, etc.) may be iteratively reduced as one or more of the passive participants become active.

US 2009210491 A1 describes techniques to automatically identify participants for a multimedia conference event. An apparatus may comprise a content-based annotation component operative to receive a meeting invitee list for a multimedia conference event. The content-based annotation component may receive multiple input media streams from multiple meeting consoles. The content-based annotation component may annotate media frames of each input media stream with identifying information for each participant within each input media stream to form a corresponding annotated media stream. Other embodiments are described and claimed.

### SUMMARY

The invention is set out in the appended set of claims.

This Summary is provided to introduce a selection of concepts in a simplified form that are further described below in the Detailed Description.

Online meetings can sometimes involve a mixture of local participants and one or more online participants. Such online meetings are sometime referred to as hybrid online meetings. For example, multiple local participants can hold a meeting in a conference room while additional remote participants joining the meeting via video/audio streaming to a computing device in the conference room. Though a computing device in the conference room can capture and transmit an overview video stream of the conference room, user experience of the remote participants can be very different than that of the local participants. For instance, the video stream from the conference room may be captured using a wide-angle camera to provide a broad view of the conference room. As such, the video stream from the conference room may not adequately identify the local participants or who is currently speaking. Also, the general view of the conference room may lead the remote participants to feel as observers instead of participants of the online meeting. The different user experiences may cause the hybrid online meeting to be less productive and inclusive than desired.

Several embodiments of the disclosed technology can address at least some aspects of the foregoing shortcomings of hybrid online meetings by implementing streaming data processing at an online meeting platform. The streaming data processing can allow remote participants to view local participants as if the local participants are also joining the online meeting virtually. In certain embodiments, upon launching an online meeting, a video processor at the remote server can be configured to determine identities of the local participants by retrieving data of the scheduled meeting from a calendar server. The retrieved data can represent, for instance, names, email addresses, identification photos, organizational positions, office locations, and/or other suitable information of the local participants. In other embodiments, the retrieved data can also include or be used to retrieve audio samples of the local participants. Such audio samples may be previous recorded by the local participants with appropriate user consent. In further embodiments, at least one module of the video processor may be a part of a computing device in the conference room or other suitable components of the online meeting platform.

During operation, the video processor can receive a raw video stream of a general view of the conference room from, for instance, a camera or a computing device in the conference room. Upon receiving the raw video stream, in certain embodiments, the video processor can be configured to identify each local participant using identification photos of the local participants via facial recognition. For example, using the identification photos, the video processor can be configured to identify facial features of the local participants by extracting landmarks or features, such as a relative position, size, and/or shape of the eyes, nose, cheekbones, and jaw, from the identification photos of the local participants. The video processor can then be configured to identify each local participants in the raw video stream using the extracted landmarks or features in one or more frames of the raw video stream. In other embodiments, the video processor can also be configured to identify each local participants via voice matching using the retrieved audio samples in lieu of or in addition to the identification photos. In further embodiments, each local participants may be identified via user tagging or via other suitable techniques.

Upon identifying each local participant in the raw video stream, the video processor can be configured to generate multiple individual video streams corresponding to each local participant in the conference room from the raw video stream. In certain implementations, the raw video stream captured by the camera can be cropped or trimmed to eliminate other local participants to generate an individual video stream for one of the local participants. In one embodiment, each frame of the cropped individual video stream can have a preset fixed size (e.g., 1280 by 720 pixels) of an image and/or the identification photo of the local participant in at least approximately a center of the image/video. In another embodiment, the image/video of the local participant in each frame can be digitally zoomed to be a preset size. In further embodiments, the cropped individual video stream can also have a preselected or dynamically adjusted aspect ratio (e.g., 3:4) or have other suitable characteristics. Once the individual video streams are generated, the video processor or other components of the remote server can be configured to transmit the individual video streams to the remote participants instead of the raw video stream. In other implementations, the foregoing processing of the raw video stream can be performed at the computing device in the conference room before transmitting the individual video streams to the remote server for delivery to the remote participants.

In further implementation, the video processor can be configured to generate the individual video streams by modulating and focusing the camera located in the conference room. In one embodiment, upon detecting speech from a local participant in the conference room, the video processor can be configured to control movement of the camera (e.g., pivot, pan, etc.) toward the local participant providing the speech. The video processor can also be configured to cause the camera to focus on and optionally zoom in on the local participant. The video processor can then capture an individual video stream of the local participant via the camera while the local participant continues to speak. In other embodiments, the video processor can also be configured to filter out audio signals from other local participants while speech is detected from the speaking local participant. While the camera is focused on the speaking local participant, individual video streams of other local participants may be looped or frozen.

Several embodiments of the video processor can thus provide the individual video streams to the remote participants as if the local participants are attending the meeting virtually. With the individual video streams, the remote server can be configured to provide additional functionalities to the remote participants. For example, the remote server can be configured to identify each individual video streams with a corresponding name, email address, or other suitable identifier of one of the local participants. The remote server can also be configured to identify a local participant who is currently speaking, for instance, by providing a speech indicator on the individual video stream. In addition, the remote servers can be configured to allow the remote participants to mute one or more local participants in the conference room by activating suitable controls on the corresponding individual video streams. As such, the online meeting session with the individual video streams can be more productive and inclusive than with an overview video stream of the conference room.

### BRIEF DESCRIPTION OF THE DRAWINGS

Figures 1-3 are schematic diagrams illustrating an online meeting platform in accordance with embodiments of the disclosed technology.
Figure 4 is a schematic diagram illustrating certain hardware/software components of a video processor suitable for the online meeting platform of Figures 1-3 in accordance with embodiments of the disclosed technology.
Figures 5A-5C are flowcharts illustrating processes of streaming data processing in an online meeting platform in accordance with embodiments of the disclosed technology.
Figure 6 is a computing device suitable for certain components of the distributed computing system in Figures 1-3.

### DETAILED DESCRIPTION

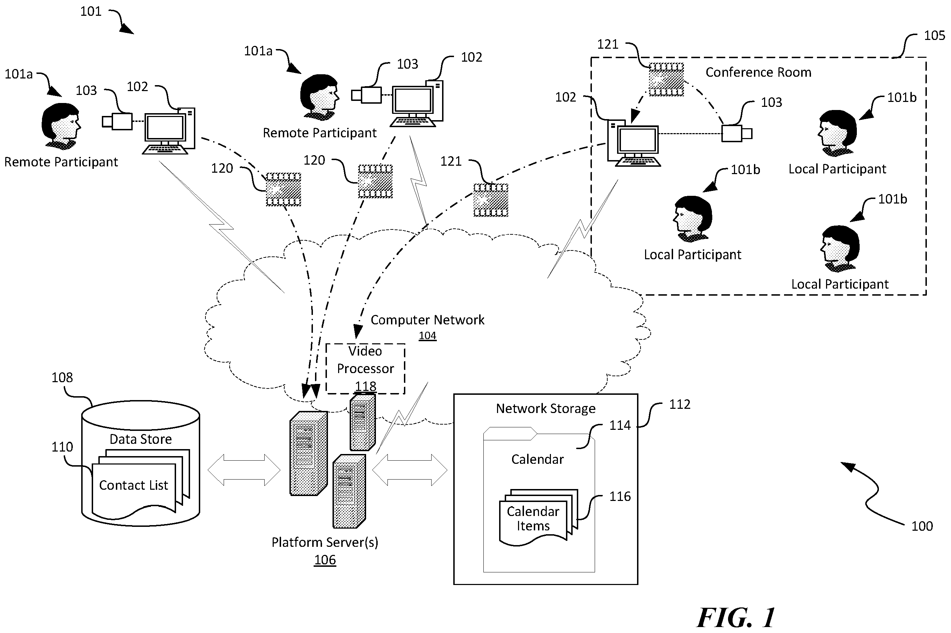

Certain embodiments of systems, devices, components, modules, routines, data structures, and processes for streaming data processing in an online meeting platform are described below. In the following description, specific details of components are included to provide a thorough understanding of certain embodiments of the disclosed technology. A person skilled in the relevant art will also understand that the technology can have additional embodiments. The technology can also be practiced without several of the details of the embodiments described below with reference to Figures 1-6.

The disclosure herein is generally directed to streaming data processing in an online meeting platform. Online meetings can allow participants to interact with one another via video/audio streaming in real-time by a computer network such as the Internet. During a meeting session, computing devices can initially establish streaming connections with a remote server configured to relay video/audio streams for the session. Upon establishing the streaming connections, each computing device can capture and continuously transmit to the remote server a video/audio stream of a participant. The remote server then can then relay the received video/audio streams to the other participants. As such, the participants of the online meeting can interact with and view videos of one another in real-time.

Online meetings can sometimes be hybrid by having local participants and remote participants joining the online meeting virtually. Though a computing device in the conference room can capture and transmit an overview video stream of the conference room, user experience of the remote participants can be very different than that of the local participants. For instance, the video stream from the conference room may be captured using a wide-angle camera to provide a broad view of the conference room. As such, the video stream from the conference room may not adequately identify the local participants or who is currently speaking. Also, the broad view of the conference room may lead the remote participants to feel as observers instead of participants of the online meeting. The different user experiences may cause the hybrid online meeting to be less productive and inclusive than desired.

Several embodiments of the disclosed technology can address at least some aspects of the foregoing shortcomings by allowing remote participants to view local participants as if the local participants are also joining the online meeting virtually. In certain embodiments, upon launching an online meeting, the remote server can be configured to determine identities of the local participants based on identification photos via facial recognition. Facial recognition can involve identifying or verifying a person from a digital image or a video frame from a video source, for example, by comparing selected facial features from the digital image and facial data in a database. Example facial recognition techniques can identify facial features by extracting landmarks, or features, from the image of the person's face. For instance, a relative position, size, and/or shape of the eyes, nose, cheekbones, and jaw may be used as landmarks or features. These landmarks or features can then be used to search for other images with matching landmarks or features. Other example facial recognition techniques can also utilize three-dimensional facial recognition, skin texture analysis, or other suitable techniques. Based on the determined identity, a raw video stream of the local participants can be edited or otherwise modified into a set of individual video streams corresponding to each local participant. With the individual video streams, the remote server can be configured to provide additional functionalities to the remote participants to render the online meeting more productive and inclusive than with an overview video stream of the conference room, as described in more detail below with reference to Figures 1-6.

Figures 1-3 are schematic diagrams illustrating an online meeting platform 100 in accordance with embodiments of the disclosed technology. As shown in Figure 1, the online meeting platform 100 can include a computer network 104 interconnecting platform servers 106 (referred to as "platform server 106" herein for simplicity) and multiple client devices 102. The platform server 106 is also interconnected with a network storage 112 containing calendar folder 114 with calendar items 116 and a data store 108 containing a contact list 110. The computer network 104 can include an intranet, a wide area network, the Internet, or other suitable types of networks. Even though particular components of the online meeting platform 100 are shown in Figure 1, in other embodiments, the online meeting platform 100 can also include additional and/or different components or arrangements. For example, in certain embodiments, the online meeting platform 100 can also include additional network storage devices, additional hosts, and/or other suitable components (not shown). In other embodiments, the network storage 112 and/or the data store 108 may be integrated into the platform server 106.

In certain implementations, the calendar items 116 can individually include a data structure with multiple data fields (not shown) containing data representing a meeting start/end date/times, names and/or email addresses of participants (e.g., remote and/or local participants 101a and 101b), a meeting location (e.g., conference room 105), a Universal Resource Locator (URL) of a link to an online version of the meeting, and/or other suitable information. In other implementations, the calendar items 116 can also include a description, an attachment, or other suitable information.

The contact list 110 can include data that represent an address book that contains users of a company, school, social network, or other suitable types of organization. This address book can be accessed over the computer network 104 using Lightweight Directory Access Protocol ("LDAP"), vCard Extensions to WebDAV ("CardDAV"), or another suitable protocol. Example components of the contact list 110 can include electronic and/or physical addresses, organizational position, telephone numbers, profile or identification photos, video samples, and/or other suitable information. The contact list 110 can be managed by an administrator (not shown) or at least partially managed by the individual remote/local participants 101a and 101b.

The client devices 102 can each include a computing device that facilitates corresponding remote participants 101a and local participant 101b accessing computing services such as online meeting services provided by the platform server 106 via the computer network 104. For example, in the illustrated embodiment, the client devices 102 individually include a desktop computer. In other embodiments, the client devices 102 can also include laptop computers, tablet computers, smartphones, or other suitable computing devices. Even though a certain number of remote participants 101a and local participants 101b in a conference room 105 are shown in Figure 1 for illustration purposes, in other embodiments, the online meeting platform 100 can facilitate any suitable number of remote/local participants 101a and 101b to access suitable types of computing services provided by the platform server 106.

As shown in Figure 1, each client device 102 can be operatively coupled to a camera 103 configured to capture a video stream in real-time. In certain implementations, the camera 103 can be a build-in camera to the corresponding client device 102. In other implementations, the camera 103 can be external to and in electronic communication with the corresponding client device 102. For example, a suitable external camera 103 can be Logitech C930e webcam provided by Newark, California. In further implementations, the camera 103 and the corresponding client device 102 can be integrated into an online conferencing system, such as Logitech Room Solution provided by Logitech of Newark, California.

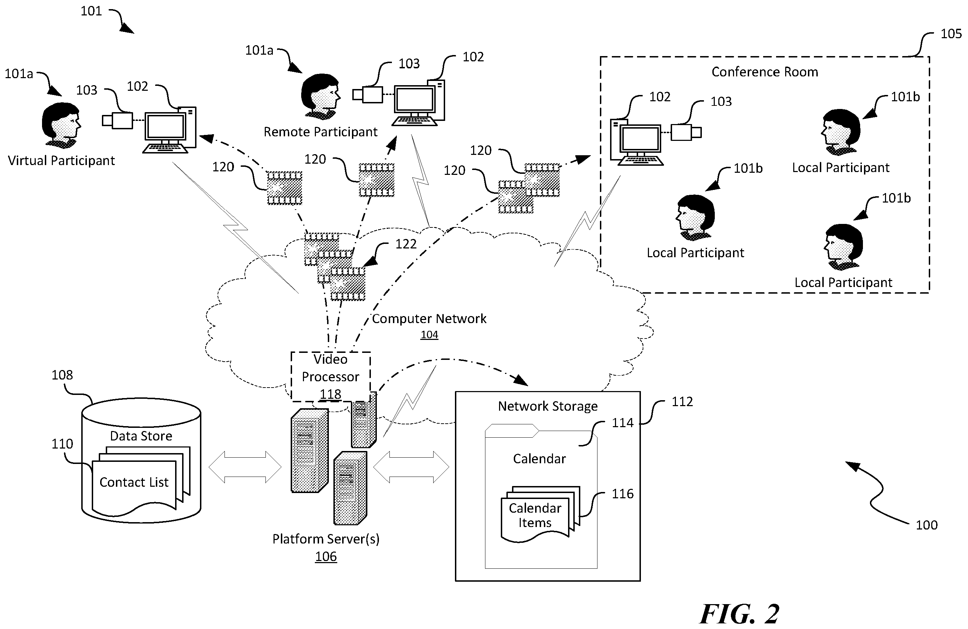

The platform server 106 can be configured to facilitate online interactions of the remote/local participants 101a and 101b via real-time video streaming and other related functionalities. For example, the client devices 102 can initially establish a streaming connection with the platform server 106 via Real Time Streaming Protocol or other suitable protocols. Upon establishing the streaming connections, the cameras 103 can capture a video of the remote/local participants 101a and 101b, and the corresponding client devices 102 can continuously transmit the captured video streams 120 and 121 to the platform server 106. In turn, the platform server 106 can relay the received video streams 120 or 121 to the other remote/local participants 101a and 101b, as shown in Figure 2.

However, simply relaying the received video stream 121 from the client device 102 in the conference room 105 to the remote participants 101a can cause the user experience of the remote participants 101a to be very different than that of the local participants 101b. For instance, the video stream 120 from the conference room 105 may include a broad view of the conference room 105 with the local participants 101b. As such, the video stream 120 from the conference room 105 may not adequately identify the local participants 105 in the conference room 105 or who is currently speaking. Also, the broad view of the conference room 105 may lead the remote participants 101a to feel as observers instead of participants of the online meeting. The different user experiences may cause the online meeting to be less productive and inclusive than desired. To address certain aspects of the foregoing drawbacks, the platform server 106 can be deploy a video processor 118 that is configured to generate a set of individual video streams 122 by editing the received video stream 121. As shown in Figure 2, the video processor 118 can be configured to retrieve a calendar item 116 having data of the schedule online meeting from the calendar folder 114. The retrieved data can represent, for instance, names, email addresses, identification photos, organizational positions, office locations, and/or other suitable information of the local participants 101b. In other embodiments, the retrieved data can also include or be used to retrieve audio samples of the local participants 101b. Such audio samples may be previous recorded by the local participants 101b with appropriate user consent.

Upon receiving the video stream 121 from the client device 102 in the conference room 105, in certain embodiments, the video processor 118 can be configured to identify each local participant 101b using identification photos of the local participants 101b via facial recognition. For example, using the identification photos, the video processor 118 can be configured to identify facial features of the local participants 101b by extracting landmarks or features, such as a relative position, size, and/or shape of the eyes, nose, cheekbones, and jaw, from the identification photos of the local participants. The video processor 118 can then be configured to identify each local participants 118 in the video stream 121 using the extracted landmarks or features in one or more frames of the video stream 121. In other embodiments, the video processor can also be configured to identify each local participants via voice matching using the retrieved audio samples in lieu of or in addition to the identification photos. In further embodiments, each local participants may be identified via user tagging or via other suitable techniques.

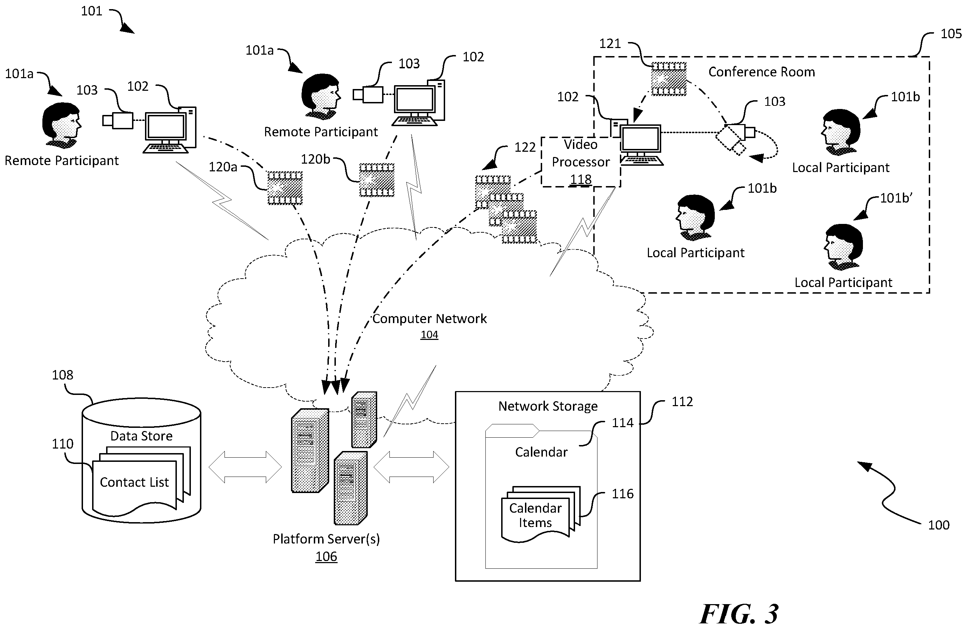

Upon identifying each local participant 101b in the video stream 121, the video processor 118 can be configured to generate multiple individual video streams 122 corresponding to each local participant 101b in the conference room 105 from the video stream 121. In certain implementations, the video stream 121 captured by the camera 103 in the conference room 105 can be cropped or trimmed to eliminate other local participants 101b to generate an individual video stream 122 for one of the local participants 101b. In one embodiment, each frame of the cropped individual video stream 122 can have a preset fixed size (e.g., 1280 by 720 pixels) of an image and/or the identification photo of the local participant 101b in at least approximately a center of the image/video. In another embodiment, the image/video of the local participant 101bin each frame can be digitally zoomed to be a preset size. In further embodiments, the cropped individual video stream 122 can also have a preselected or dynamically adjusted aspect ratio (e.g., 3:4) or have other suitable characteristics. Once the individual video streams 122 are generated, the video processor 118 or other components of the platform server 106 can be configured to transmit the individual video streams 122 to the remote participants 101a instead of the video stream 121 originally received from the client device 102 in the conference room 105. In other implementations, the video processor 118 can be deployed in the client device 102 in the conference room 105, and the foregoing processing of the video stream 121 can be performed at the computing device 102 in the conference room 105 before transmitting the individual video streams 122 to the platform server 105 for delivery to the remote participants 101a, as shown in Figure 3.

Also shown in Figure 3, the video processor 118 can be configured to generate the individual video streams 122 by modulating and focusing the camera 103 located in the conference room 105. In one embodiment, upon detecting speech from a local participant 101b' in the conference room 105, the video processor 118 can be configured to control movement of the camera 103 (e.g., pivot, pan, etc.) toward the local participant 101b' providing the speech. The video processor 118 can also be configured to cause the camera 103 to focus on and optionally zoom in on the local participant 101b'. The video processor 118 can then capture an individual video stream 122 of the local participant 101b' via the camera 103 while the local participant 101b' continues to speak. In other embodiments, the video processor 118 can also be configured to filter out audio signals from other local participants 101b while speech is detected from the speaking local participant 101b'. While the camera 103 is focused on the speaking local participant 101b', individual video streams 122 of other local participants 101b may be looped or frozen.

Several embodiments of the video processor 118 can thus provide the individual video streams 122 to the remote participants 101a as if the local participants 101b are attending the meeting virtually. With the individual video streams 122, the platform server 106 can be configured to provide additional functionalities to the remote participants 101a. For example, the platform server 106 can be configured to identify each individual video streams 122 with a corresponding name, email address, or other suitable identifier of one of the local participants 101b. The platform server 106 can also be configured to identify a local participant 101b who is currently speaking, for instance, by providing a speech indicator on the individual video stream 122. In addition, the platform server 106 can be configured to allow the remote participants to mute one or more local participants 101b in the conference room 105 by activating suitable controls on the corresponding individual video streams 122. As such, the online meeting session with the individual video streams 122 can be more productive and inclusive than with an overview video stream of the conference room 105.

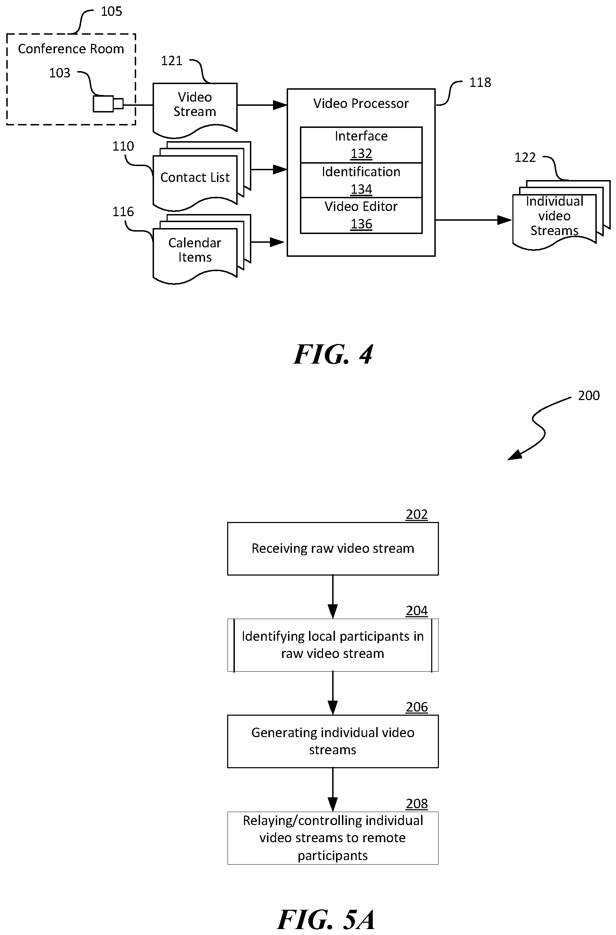

Figure 4 is a schematic diagram illustrating certain hardware/software components of a video processor 118 suitable for the online meeting platform of Figures 1-3 in accordance with embodiments of the disclosed technology. In Figure 4 and in other Figures herein, individual software components, objects, classes, modules, and routines may be a computer program, procedure, or process written as source code in C, C++, C#, Java, and/or other suitable programming languages. A component may include, without limitation, one or more modules, objects, classes, routines, properties, processes, threads, executables, libraries, or other components. Components may be in source or binary form. Components may include aspects of source code before compilation (e.g., classes, properties, procedures, routines), compiled binary units (e.g., libraries, executables), or artifacts instantiated and used at runtime (e.g., objects, processes, threads).

Components within a system may take different forms within the system. As one example, a system comprising a first component, a second component and a third component can, without limitation, encompass a system that has the first component being a property in source code, the second component being a binary compiled library, and the third component being a thread created at runtime. The computer program, procedure, or process may be compiled into object, intermediate, or machine code and presented for execution by one or more processors of a personal computer, a network server, a laptop computer, a smartphone, and/or other suitable computing devices.

Equally, components may include hardware circuitry. A person of ordinary skill in the art would recognize that hardware may be considered fossilized software, and software may be considered liquefied hardware. As just one example, software instructions in a component may be burned to a Programmable Logic Array circuit or may be designed as a hardware circuit with appropriate integrated circuits. Equally, hardware may be emulated by software. Various implementations of source, intermediate, and/or object code and associated data may be stored in a computer memory that includes read-only memory, random-access memory, magnetic disk storage media, optical storage media, flash memory devices, and/or other suitable computer readable storage media excluding propagated signals.

As shown in Figure 4, the video processor can include an interface component 132, an identification component 134, and a video editor 136 operatively coupled to one another. Though particular components are shown in Figure 4, in other embodiments, the video processor 118 can also include additional and/or different components in additional to or in lieu of those shown in Figure 4. The interface component 132 can be configured to receive and/or retrieve the contact list 110 and the calendar items 116 upon initiation of an online meeting. For example, the interface component 132 can be configured to identify an online meeting by, for instance, a meeting identifier, a URL, or other suitable parameters of the online meeting. Upon identifying the online meeting, the interface component 132 can be configured to retrieve one of the calendar items 116 corresponding to the identified online meeting. Based on the retrieved calendar item 116, the interface component 132 can be configured to identify all participants of the online meeting and retrieve corresponding contact list 110 of the identified participants. Upon receiving the video stream 121 from the camera 103 in the conference room 105, the interface component 132 can forward the received video stream 121 and the contact list 110 of the participants to the identification component 134 for further processing.

The identification component 134 can be configured to identify a local participant 101b (Figure 1) captured in the video stream 121 based on information (e.g., identification photos and/or voice samples) included in the contact list 110. For example, the identification component 134 can be configured to initially determine whether a participant of the online meeting is attending remotely or locally. In response to determining that the participant is attending remotely, the identification component 134 skips performing identification of the participant. On the other hand, in response to determining that the participant is a local participant, the identification component 134 can examine one or more frames of the received video stream 121 and identify the local participant via facial recognition and/or voice matching. Upon identifying the local participant, the identification component 134 can forward the identity of the local participant to the video editor to generate a corresponding individual video stream of the local participant.

In certain embodiments, the video editor 136 can be configured to crop or trim the video stream 121 to eliminate other local participants 101b to generate an individual video stream 122 (Figure 2) for the local participant 101b. In one embodiment, each frame of the cropped individual video stream 121 can have a preset fixed size (e.g., 1280 by 720 pixels) of an image and/or the identification photo of the local participant 101b in at least approximately a center of the image/video. In another embodiment, the image/video of the local participant 101b in each frame can be digitally zoomed to be a preset size. In further embodiments, the cropped individual video stream 122 can also have a preselected or dynamically adjusted aspect ratio (e.g., 3:4) or have other suitable characteristics. In yet further embodiments, the video editor 136 can also filter and remove audio of other local participants from the generated individual video stream of the local participant 101b.

Once the individual video stream 122 is generated, the video editor 136 can temporarily store the generated individual video stream 122 in, for instance, a buffer (not shown) and associate the individual video stream 122 with the identity of the local participant 101b. In one embodiment, the association is via modification of metadata of the generated video stream 122. In other embodiments, the association can be via other suitable data and/or metadata modification. Upon generation of the individual video stream 122, the video processor 118 or other components of the platform server 106 (Figure 1) can be configured to transmit the individual video stream 122 to the remote participants 101a (Figure 1) instead of the video stream 121.

Figures 5A-5C are flowcharts illustrating processes of streaming data processing in accordance with embodiments of the disclosed technology. Even though embodiments of the processes are described below with reference to the online meeting platform 100 of Figures 1-3, in other embodiments, the processes may be implemented in other computing systems with different components and/or arrangements.

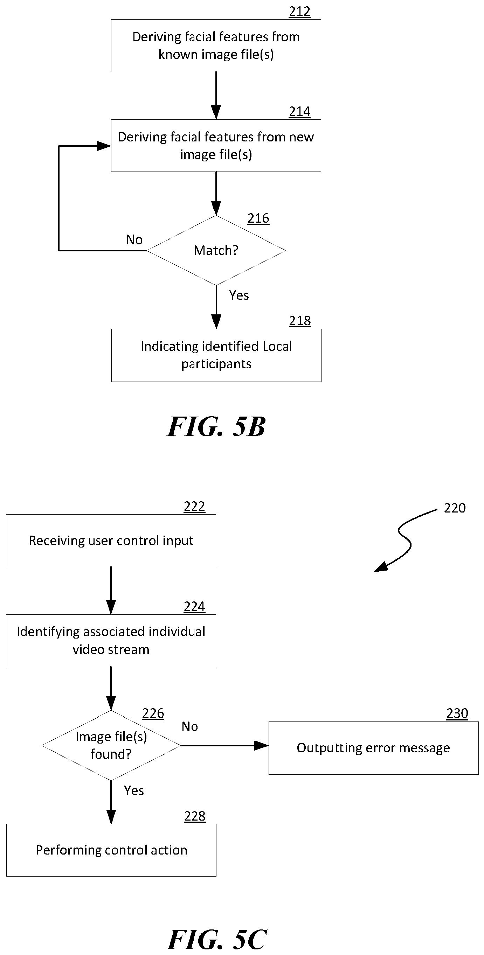

As shown in Figure 5A, a process 200 can include receiving a raw video stream at stage 202. As described above with reference to Figure 1, the raw video stream can include a video stream of multiple local participants 101b (Figure 1) captured using a camera 103 (Figure 1) in a conference room 105. Upon receiving the raw video stream, the process 200 can include identifying local participants in the received raw video stream at stage 204. As described above with reference to Figure 2, identifying the local participants can be via facial recognition using identification photos of the local participants and/or via voice matching using voice samples of the local participants. Example operations of identifying the local participants are described in more detail below with reference to Figure 5B. The process 200 can then include generating individual video streams from the raw video stream at stage 200. Example operations for generating the individual video streams are described above with reference to Figures 2 and 3. The process 200 can then include relaying and controlling the relay of the individual video streams to remote participants 101a (Figure 1). Example operations of controlling the relay are described below with reference to Figure 5C.

Figure 5B illustrate example operations for identifying a local participant via facial recognition. As shown in Figure 5B, the operations can include deriving facial features from known image files, such as profile or identification photos at stage 212. The operations can then include deriving facial features from new images, such as one or more frames form the raw video stream, at stage 214. In response to determining that the derived facial features from the known image files do not match those in the new images, the operations can revert to deriving facial features of additional images in the new images at stage 214. Otherwise, the operations can include indicating that a person (or other suitable image types) is identified in the new image.

Figure 5C is flowchart illustrating a process 220 of controlling relay of a generated individual video stream in accordance with embodiments of the disclosed technology. As shown in Figure 5C, the process 220 can include receiving a user control input at stage 222. The control input can include one or more commands of mute, pause, block, etc. The process 220 can then include identifying an associated individual video stream at stage 224. The process 220 can then include a decision stage 226 to determine whether the associated individual video stream is found. In response to determining that the associated individual video stream is not found, the process 220 can include outputting an error message. In response to determining that the associated individual video stream is found, the process 220 can include performing a corresponding control action at stage 228.

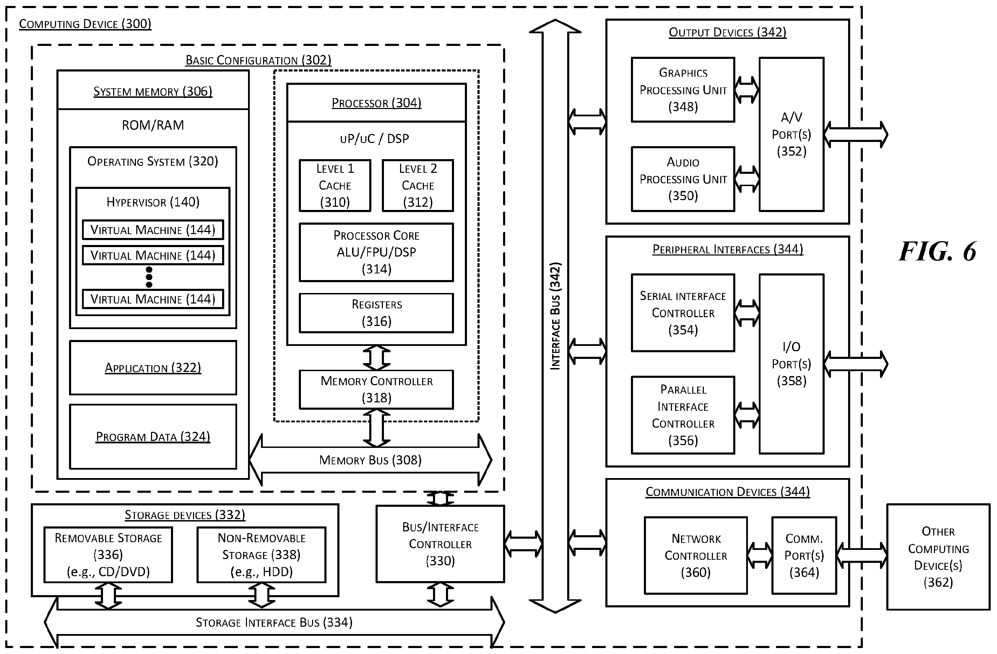

Figure 6 is a computing device 300 suitable for certain components of the online meeting platform 100 in Figures 1-3. For example, the computing device 300 can be suitable for the platform servers 106 or the client devices 102 of Figure 1. In a very basic configuration 302, the computing device 300 can include one or more processors 304 and a system memory 306. A memory bus 308 can be used for communicating between processor 304 and system memory 306.

Depending on the desired configuration, the processor 304 can be of any type including but not limited to a microprocessor (µP), a microcontroller (µC), a digital signal processor (DSP), or any combination thereof. The processor 304 can include one more level of caching, such as a level-one cache 310 and a level-two cache 312, a processor core 314, and registers 316. An example processor core 314 can include an arithmetic logic unit (ALU), a floating point unit (FPU), a digital signal processing core (DSP Core), or any combination thereof. An example memory controller 318 can also be used with processor 304, or in some implementations memory controller 318 can be an internal part of processor 304.

Depending on the desired configuration, the system memory 306 can be of any type including but not limited to volatile memory (such as RAM), non-volatile memory (such as ROM, flash memory, etc.) or any combination thereof. The system memory 306 can include an operating system 320, one or more applications 322, and program data 324. This described basic configuration 302 is illustrated in Figure 6 by those components within the inner dashed line.

The computing device 300 can have additional features or functionality, and additional interfaces to facilitate communications between basic configuration 302 and any other devices and interfaces. For example, a bus/interface controller 330 can be used to facilitate communications between the basic configuration 302 and one or more data storage devices 332 via a storage interface bus 334. The data storage devices 332 can be removable storage devices 336, non-removable storage devices 338, or a combination thereof. Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), and tape drives to name a few. Example computer storage media can include volatile and nonvolatile, removable, and non-removable media implemented in any method or technology for storage of information, such as computer readable instructions, data structures, program modules, or other data. The term "computer readable storage media" or "computer readable storage device" excludes propagated signals and communication media.

The system memory 306, removable storage devices 336, and non-removable storage devices 338 are examples of computer readable storage media. Computer readable storage media include, but not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other media which can be used to store the desired information, and which can be accessed by computing device 300. Any such computer readable storage media can be a part of computing device 300. The term "computer readable storage medium" excludes propagated signals and communication media.

The computing device 300 can also include an interface bus 340 for facilitating communication from various interface devices (e.g., output devices 342, peripheral interfaces 344, and communication devices 346) to the basic configuration 302 via bus/interface controller 330. Example output devices 342 include a graphics processing unit 348 and an audio processing unit 350, which can be configured to communicate to various external devices such as a display or speakers via one or more A/V ports 352. Example peripheral interfaces 344 include a serial interface controller 354 or a parallel interface controller 356, which can be configured to communicate with external devices such as input devices (e.g., keyboard, mouse, pen, voice input device, touch input device, etc.) or other peripheral devices (e.g., printer, scanner, etc.) via one or more I/O ports 358. An example communication device 346 includes a network controller 360, which can be arranged to facilitate communications with one or more other computing devices 362 over a network communication link via one or more communication ports 364.

The network communication link can be one example of a communication media. Communication media can typically be embodied by computer readable instructions, data structures, program modules, or other data in a modulated data signal, such as a carrier wave or other transport mechanism, and can include any information delivery media. A "modulated data signal" can be a signal that has one or more of its characteristics set or changed in such a manner as to encode information in the signal. By way of example, and not limitation, communication media can include wired media such as a wired network or direct-wired connection, and wireless media such as acoustic, radio frequency (RF), microwave, infrared (IR) and other wireless media. The term computer readable media as used herein can include both storage media and communication media.

The computing device 300 can be implemented as a portion of a small-form factor portable (or mobile) electronic device such as a cell phone, a personal data assistant (PDA), a personal media player device, a wireless web-watch device, a personal headset device, an application specific device, or a hybrid device that include any of the above functions. The computing device 300 can also be implemented as a personal computer including both laptop computer and non-laptop computer configurations.

## Claims

1. A method of streaming data processing in an online meeting platform (100) having a remote server (106), a first computing device (102) located in a conference room (105), and a second computing device (102) remote from the conference room (105) interconnected via a computer network (104), the method comprising:
receiving (202), at the remote server (106), a video stream captured by a camera (103) of the first computing device (102) located in the conference room (105), the video stream capturing images of multiple local participants (101b) of an online meeting that also has a remote participant (101a) joining the online meeting via the computer network (104) using the second computing device (102);
receiving (202), at the remote server (106), a video stream captured by a camera (103) of the second computing device (102); and
upon receiving the video streams captured by the cameras (103) of the first and second computing devices (102), at the remote server (106),
determining (204) identities of the multiple local participants (101b) in the received video streams using meeting information of the online meeting by:
determining whether one of the participants is joining the online meeting remotely; and
in response to determining that one of the participants is joining the online meeting remotely, skipping determining an identity of the one of the participants who is joining the online meeting remotely;
editing (206) the received video stream from the first computing device (102) to generate a set of individual video streams (122) each corresponding to one of the multiple local participants (101b) and associating the generated set of individual video streams (122) with the determined identities of the multiple local participants (101b) in the conference room (105); and
transmitting (208) the generated set of individual video streams (122) with the associated identities of the multiple local participants (101b) as separate video streams to the second computing device (102) corresponding to a remote participant (101a) of the online meeting as if the multiple local participants (101b) are virtually joining the online meeting.

2. The method of claim 1, further comprising:
retrieving, from a network storage, data representing the meeting information of the online meeting, the meeting information containing data representing names and identification photos of the multiple local participants (101b); and
wherein determining the identities of the captured images of the multiple local participants (101b) includes determining the identities of the multiple local participants (101b) using the identification photos via facial recognition.

3. The method of claim 1, further comprising:
retrieving, from a network storage, data representing meeting information of the online meeting, the meeting information containing data representing identities of all participants; and
wherein determining the identities of the multiple local participants further comprises:
in response to determining that one of the participants is not joining the online meeting remotely, retrieving an identification photo of the one of the participants from a contact list and using the retrieved identification photo to determine an identity of the one of the participants captured in the received video stream.

4. The method of claim 1, further comprising:
retrieving, from a network storage, data representing meeting information of the online meeting, the meeting information containing data representing voice samples of all participants; and
wherein determining the identities of the multiple local participants further comprises:
in response to determining that one of the participants is not joining the online meeting remotely, using the voice samples in the retrieved data representing the meeting information to determine an identity of the one of the participants captured in the received video stream via voice matching.

5. The method of claim 1 wherein editing the received video stream includes:
for one of the multiple local participants (101b),
cropping the received video stream to remove all other local participants (101b) from the received video stream; and
temporarily saving the cropped video stream as one of the individual video streams (122) in the generated set.

6. The method of claim 1 wherein editing the received video stream includes:
for one of the multiple local participants (101b),
cropping the received video stream to remove all other local participants (101b) from the received video stream;
digitally enlarging the cropped video stream into a preset size; and
temporarily saving the digitally enlarged video stream as one of the individual video streams (122) in the generated set.

7. The method of claim 6, wherein said one of the multiple local participants is a local participant providing speech.

8. The method of claim 6 or 7, further comprising filtering out audio signals from said all other local participants.

9. The method of any of claims 6-8, further comprising freezing or looping the individual video streams of said all other local participants.

10. The method of claim 1, further comprising
receiving, at the remote server (106), from a third computing device (102), another video stream capturing an image of a remote participant (101a)of the online meeting; and
transmitting the another video stream to the second computing device (102) to be displayed on a graphical user interface along with and in a format generally similar to the set of individual video streams (122).

11. The method of claim 1 wherein transmitting the generated set of individual video streams (122) includes transmitting the generated set of individual video streams (122) with the associated identities of the multiple local participants (101b) in the conference room (105) to the second computing device (102) instead of the received video stream received from the first computing device (102).

12. The method of claim 1 further comprising: allowing the remote participants (101a) to mute one or more local participants (101b) in the conference room by activating suitable controls on the corresponding individual video streams (122).

13. A server in an online meeting platform (100) having a first computing device (102) located in a conference room (105) and a second computing device (102) remote from the conference room (105) interconnected to the server via a computer network (104), the server comprising:
a processor; and
a memory operatively coupled to the processor, the memory containing instructions executable by the processor to cause the computing device (102) to perform a process according to one of claims 1-12.

## Patentansprüche

1. Verfahren zur Streaming-Datenverarbeitung in einer Online-Meeting-Plattform (100) mit einem entfernten Server (106), einer ersten Rechenvorrichtung (102), die sich in einem Konferenzraum (105) befindet, und einer zweiten Rechenvorrichtung (102), die von dem Konferenzraum (105) entfernt ist, und die über ein Computernetzwerk (104) miteinander verbunden sind, wobei das Verfahren Folgendes umfasst:
Empfangen (202), an dem entfernten Server (106), eines Videostreams, der durch eine Kamera (103) der ersten Rechenvorrichtung (102) aufgenommen wird, die sich in dem Konferenzraum (105) befindet, wobei der Videostream Bilder von mehreren lokalen Teilnehmern (101b) eines Online-Meetings aufnimmt, das auch einen entfernten Teilnehmer (101a) aufweist, der dem Online-Meeting über das Computernetzwerk (104) unter Verwendung der zweiten Rechenvorrichtung (102) beitritt;
Empfangen (202), an dem entfernten Server (106), eines Videostreams, der durch eine Kamera (103) der zweiten Rechenvorrichtung (102) aufgenommen wird; und
nach dem Empfangen der Videostreams, die durch die Kameras (103) der ersten und der zweiten Rechenvorrichtung (102) aufgenommen werden, an dem entfernten Server (106),
Feststellen (204) von Identitäten der mehreren lokalen Teilnehmer (101b) in den empfangenen Videostreams unter Verwendung von Meetinginformationen des Online-Meetings durch:
Feststellen, ob einer der Teilnehmer dem Online-Meeting aus der Ferne beitritt; und
als Reaktion auf das Feststellen, dass einer der Teilnehmer dem Online-Meeting aus der Ferne betritt, Überspringen des Feststellens einer Identität des einen der Teilnehmer, der dem Online-Meeting aus der Ferne beitritt;
Bearbeiten (206) des empfangenen Videostreams von der ersten Rechenvorrichtung (102), um einen Satz von einzelnen Videostreams (122) zu erzeugen, wobei jeder einem der mehreren lokalen Teilnehmer (101b) entspricht, und Zuordnen des erzeugten Satzes von einzelnen Videostreams (122) zu den festgestellten Identitäten der mehreren lokalen Teilnehmer (101b) in dem Konferenzraum (105); und
Übertragen (208) des erzeugten Satzes von einzelnen Videostreams (122) mit den zugeordneten Identitäten der mehreren lokalen Teilnehmer (101b) als getrennte Videostreams an die zweite Rechenvorrichtung (102), die einem entfernten Teilnehmer (101a) des Online-Meetings entspricht, als ob die mehreren lokalen Teilnehmer (101b) dem Online-Meeting virtuell beitreten würden.

2. Verfahren nach Anspruch 1, ferner umfassend:
Abrufen, aus einem Netzwerkspeicher, von Daten, die Meetinginformationen des Online-Meetings darstellen, wobei die Meetinginformationen Daten enthalten, die Namen und Identifikationsfotos der mehreren lokalen Teilnehmer (101b) darstellen; und
wobei das Feststellen der Identitäten der aufgenommenen Bilder der mehreren lokalen Teilnehmer (101b) Feststellen der Identitäten der mehreren lokalen Teilnehmer (101b) unter Verwendung der Identifikationsfotos per Gesichtserkennung beinhaltet.

3. Verfahren nach Anspruch 1, ferner umfassend:
Abrufen, aus einem Netzwerkspeicher, von Daten, die Meetinginformationen des Online-Meetings darstellen, wobei die Meetinginformationen Daten enthalten, die Identitäten von sämtlichen Teilnehmern darstellen; und
wobei das Feststellen der Identitäten der mehreren lokalen Teilnehmer ferner Folgendes umfasst:
als Reaktion auf das Feststellen, dass einer der Teilnehmer dem Online-Meeting nicht aus der Ferne beitritt, Abrufen eines Identifikationsfotos des einen der Teilnehmer aus einer Kontaktliste und Verwenden des abgerufenen Identifikationsfotos, um eine Identität des einen der Teilnehmer, die in dem empfangenen Videostream aufgenommen werden, festzustellen.

4. Verfahren nach Anspruch 1, ferner umfassend:
Abrufen, aus einem Netzwerkspeicher, von Daten, die Meetinginformationen des Online-Meetings darstellen, wobei die Meetinginformationen Daten enthalten, die Sprachproben von sämtlichen Teilnehmern darstellen; und
wobei das Feststellen der Identitäten der mehreren lokalen Teilnehmer ferner Folgendes umfasst:
als Reaktion auf das Feststellen, dass einer der Teilnehmer dem Online-Meeting nicht aus der Ferne beitritt, Verwenden der Sprachproben in den abgerufenen Daten, welche die MeetingInformationen darstellen, um eine Identität des einen der Teilnehmer, die in dem empfangenen Videostream aufgenommen werden, per Sprachabgleich festzustellen.

5. Verfahren nach Anspruch 1, wobei das Bearbeiten des empfangenen Videostreams Folgendes beinhaltet:
für einen der mehreren lokalen Teilnehmer (101b),
Zuschneiden des empfangenen Videostreams, um sämtliche anderen lokalen Teilnehmer (101b) aus dem empfangenen Videostream zu entfernen; und
vorübergehendes Speichern des zugeschnittenen Videostreams als einen der einzelnen Videostreams (122) in dem erzeugten Satz.

6. Verfahren nach Anspruch 1, wobei das Bearbeiten des empfangenen Videostreams Folgendes beinhaltet:
für einen der mehreren lokalen Teilnehmer (101b),
Zuschneiden des empfangenen Videostreams, um sämtliche anderen lokalen Teilnehmer (101b) aus dem empfangenen Videostream zu entfernen;
digitales Vergrößern des zugeschnittenen Videostreams auf eine voreingestellte Größe; und
vorübergehendes Speichern des digital vergrößerten Videostreams als einen der einzelnen Videostreams (122) in dem erzeugten Satz.

7. Verfahren nach Anspruch 6, wobei es sich bei dem einen der mehreren lokalen Teilnehmer um einen lokalen Teilnehmer handelt, der spricht.

8. Verfahren nach Anspruch 6 oder 7, ferner umfassend Herausfiltern von Audiosignalen von den sämtlichen anderen lokalen Teilnehmern.

9. Verfahren nach einem der Ansprüche 6-8, ferner umfassend Einfrieren oder Schleifen der einzelnen Videostreams der sämtlichen anderen lokalen Teilnehmer.

10. Verfahren nach Anspruch 1, ferner umfassend:
Empfangen, an dem entfernten Server (106), von einer dritten Rechenvorrichtung (102), eines anderen Videostreams, der ein Bild eines entfernten Teilnehmers (101a)des Online-Meetings aufnimmt; und
Übertragen des anderen Videostreams an die zweite Rechenvorrichtung (102), um auf einer grafischen Benutzeroberfläche zusammen mit dem Satz von einzelnen Videostreams (122) und in einem Format, das im Allgemeinen diesem ähnlich ist, angezeigt zu werden.

11. Verfahren nach Anspruch 1, wobei das Übertragen des erzeugten Satzes von einzelnen Videostreams (122) Übertragen des erzeugten Satzes von einzelnen Videostreams (122) mit den zugeordneten Identitäten der mehreren lokalen Teilnehmer (101b) in dem Konferenzraum (105) an die zweite Rechenvorrichtung (102) anstelle des empfangenen Videostreams, der von der ersten Rechenvorrichtung (102) empfangen wird, beinhaltet.

12. Verfahren nach Anspruch 1, ferner umfassend: Ermöglichen, dass die entfernten Teilnehmer (101a) einen oder mehrere lokale Teilnehmer (101b) in dem Konferenzraum stummschalten, indem sie geeignete Steuerelemente für die entsprechenden einzelnen Videostreams (122) aktivieren.

13. Server in einer Online-Meeting-Plattform (100) mit einer ersten Rechenvorrichtung (102), die sich in einem Konferenzraum (105) befindet, und einer zweiten Rechenvorrichtung (102), die von dem Konferenzraum (105) entfernt ist, und die über ein Computernetzwerk (104) miteinander verbunden sind, wobei der Server Folgendes umfasst:
einen Prozessor; und
einen Speicher, der betriebswirksam mit dem Prozessor gekoppelt ist, wobei der Speicher Anweisungen enthält, die durch den Prozessor ausführbar sind, um die Rechenvorrichtung (102) dazu zu veranlassen, einen Prozess nach einem der Ansprüche 1-12 durchzuführen.

## Revendications

1. Procédé de traitement de données en flux continu sur une plateforme de réunion en ligne (100) ayant un serveur distant (106), un premier dispositif informatique (102) situé dans une salle de conférence (105) et un deuxième dispositif informatique (102) distant de la salle de conférence (105) interconnectés via un réseau informatique (104), le procédé comprenant :
la réception (202), au niveau du serveur distant (106), d'un flux vidéo capturé par une caméra (103) du premier dispositif informatique (102) situé dans la salle de conférence (105), le flux vidéo capturant des images de multiples participants locaux (101b) d'une réunion en ligne qui a également un participant distant (101a) rejoignant la réunion en ligne via le réseau informatique (104) à l'aide du deuxième dispositif informatique (102) ;
la réception (202), sur le serveur distant (106), d'un flux vidéo capturé par une caméra (103) du deuxième dispositif informatique (102) ; et
lors de la réception des flux vidéo capturés par les caméras (103) des premier et deuxième dispositifs informatiques (102), au niveau du serveur distant (106),
la détermination (204) d'identités des multiples participants locaux (101b) dans les flux vidéo reçus à l'aide d'informations de réunion de la réunion en ligne par :
le fait de déterminer si l'un des participants rejoint la réunion en ligne à distance ; et
en réponse à la détermination qu'un des participants rejoint la réunion en ligne à distance, l'omission de la détermination d'une identité de l'un des participants qui rejoint la réunion en ligne à distance ;
l'édition (206) du flux vidéo reçu à partir du premier dispositif informatique (102) pour générer un ensemble de flux vidéo individuels (122) correspondant chacun à l'un des multiples participants locaux (101b) et l'association de l'ensemble généré de flux vidéo individuels (122) aux identités déterminées des multiples participants locaux (101b) dans la salle de conférence (105) ; et
la transmission (208) de l'ensemble généré de flux vidéo individuels (122) avec les identités associées des multiples participants locaux (101b) en tant que flux vidéo séparés vers le deuxième dispositif informatique (102) correspondant à un participant distant (101a) de la réunion en ligne comme si les multiples participants locaux (101b) rejoignaient virtuellement la réunion en ligne.

2. Procédé selon la revendication 1, comprenant en outre :
la récupération, à partir d'un stockage réseau, de données représentant les informations de réunion de la réunion en ligne, les informations de réunion contenant des données représentant des noms et des photos d'identification des multiples participants locaux (101b) ; et
dans lequel la détermination des identités des images capturées des multiples participants locaux (101b) comporte la détermination des identités des multiples participants locaux (101b) à l'aide des photos d'identification via la reconnaissance faciale.

3. Procédé selon la revendication 1, comprenant en outre :
la récupération, à partir d'un stockage réseau, de données représentant des informations de réunion de la réunion en ligne, les informations de réunion contenant des données représentant des identités de tous les participants ; et
dans lequel la détermination des identités des multiples participants locaux comprend en outre :
en réponse à la détermination qu'un des participants ne rejoint pas la réunion en ligne à distance, la récupération d'une photo d'identification de l'un des participants à partir d'une liste de contacts et l'utilisation de la photo d'identification récupérée pour déterminer une identité de l'un des participants capturés dans le flux vidéo reçu.

4. Procédé selon la revendication 1, comprenant en outre :
la récupération, à partir d'un stockage réseau, de données représentant des informations de réunion de la réunion en ligne, les informations de réunion contenant des données représentant des échantillons vocaux de tous les participants ; et
dans lequel la détermination des identités des multiples participants locaux comprend en outre :
en réponse à la détermination qu'un des participants ne rejoint pas la réunion en ligne à distance, l'utilisation des échantillons vocaux dans les données récupérées représentant les informations de réunion pour déterminer une identité de l'un des participants capturés dans le flux vidéo reçu via une correspondance vocale.

5. Procédé selon la revendication 1, dans lequel l'édition du flux vidéo reçu comporte :
pour l'un des multiples participants locaux (101b),
le recadrage du flux vidéo reçu pour supprimer tous les autres participants locaux (101b) du flux vidéo reçu ; et
l'enregistrement temporaire du flux vidéo recadré comme l'un des flux vidéo individuels (122) dans l'ensemble généré.

6. Procédé selon la revendication 1, dans lequel l'édition du flux vidéo reçu comporte :
pour l'un des multiples participants locaux (101b),
le recadrage du flux vidéo reçu pour supprimer tous les autres participants locaux (101b) du flux vidéo reçu ;
l'agrandissement numérique du flux vidéo recadré à une taille prédéfinie ; et
l'enregistrement temporaire du flux vidéo agrandi numériquement comme l'un des flux vidéo individuels (122) dans l'ensemble généré.

7. Procédé selon la revendication 6, dans lequel ledit un des multiples participants locaux est un participant local prenant la parole.

8. Procédé selon la revendication 6 ou 7, comprenant en outre le filtrage des signaux audio provenant de tous les autres participants locaux.

9. Procédé selon l'une quelconque des revendications 6 à 8, comprenant en outre le gel ou la mise en boucle des flux vidéo individuels de tous les autres participants locaux.

10. Procédé selon la revendication 1, comprenant en outre :
la réception, au niveau du serveur distant (106), à partir d'un troisième dispositif informatique (102), d'un autre flux vidéo capturant une image d'un participant distant (101a) de la réunion en ligne ; et
la transmission de l'autre flux vidéo au deuxième dispositif informatique (102) pour être affiché sur une interface utilisateur graphique avec et dans un format généralement similaire à l'ensemble de flux vidéo individuels (122).

11. Procédé selon la revendication 1, dans lequel la transmission de l'ensemble généré de flux vidéo individuels (122) comporte la transmission de l'ensemble généré de flux vidéo individuels (122) avec les identités associées des multiples participants locaux (101b) dans la salle de conférence (105) au deuxième dispositif informatique (102) au lieu du flux vidéo reçu à partir du premier dispositif informatique (102).

12. Procédé selon la revendication 1, comprenant en outre : le fait de permettre aux participants distants (101a) de couper le son d'un ou de plusieurs participants locaux (101b) dans la salle de conférence en activant des commandes appropriées sur les flux vidéo individuels correspondants (122).

13. Serveur dans une plateforme de réunion en ligne (100) ayant un premier dispositif informatique (102) situé dans une salle de conférence (105) et un deuxième dispositif informatique (102) distant de la salle de conférence (105) interconnectés au serveur via un réseau informatique (104), le serveur comprenant :
un processeur ; et
une mémoire couplée de manière opérationnelle au processeur, la mémoire contenant des instructions exécutables par le processeur pour amener le dispositif informatique (102) à réaliser un processus selon l'une quelconque des revendications 1 à 12.
